# EUROPÄISCHE PATENTANMELDUNG

(11) **EP 2 487 389 A1**
(43) Veröffentlichungstag der Anmeldung: **15.08.2012**
(21) Anmeldenummer: 12150127.4
(22) Anmeldetag: 04.01.2012
(51) Int. Cl.: F16H 61/18

(54) **Schaltvorrichtung für ein Fahrzeuggetriebe**

(30) Priorität: 14.02.2011 DE 102011004016
(71) Anmelder: ZF Friedrichshafen AG, 88038 Friedrichshafen (DE)
(72) Erfinder: Eisenberger, Dieter, 88693 Deggenhausertal (DE)

(57) **Zusammenfassung**

Es wird eine Schaltvorrichtung für ein Fahrzeuggetriebe mit einer Schaltwelle (1) vorgeschlagen, die in einem Gehäuse axial verschiebbar und drehbar angeordnet ist, wobei durch deren Axialbewegung eine Schaltgasse wählbar und durch deren Drehbewegung in der gewählten Schaltgasse eine Gangstufe schaltbar ist, wobei ein Sperrelement (5) mit der Schaltwelle (1) zur Absicherung einer Rückwärtsgang-Schaltgasse in Wirkverbindung bringbar ist, dadurch gekennzeichnet, dass zumindest ein zweites Sperrelement (6) vorgesehen ist, welches unabhängig von dem ersten Sperrelement (5) derart die Bewegung der Schaltwelle (1) beeinflusst, dass aus der Rückwärtsgang-Schaltgasse (RG/CR) nur die benachbarte Vorwärtsgang-Schaltgasse (1/2) anwählbar ist, sodass nächst höhere Vorwärtsgang-Schaltgassen (3/4) gesperrt sind, und aus einer höheren Vorwärtsgang- Schaltgasse (3/4) nur eine benachbarte Vorwärtsgang- Schaltgasse (1/2) anwählbar ist.

## Beschreibung

Die vorliegende Erfindung betrifft eine Schaltvorrichtung für ein Fahrzeuggetriebe gemäß der im Oberbegriff des Patentanspruches 1 näher definierten Art.

Beispielsweise aus der Druckschrift DE 10 2007 037 521 A1 ist eine Schaltungsanordnung zum Wählen und Schalten eines Ganges bei einem Handschaltgetriebe eines Fahrzeuges bekannt. Die Schaltungsanordnung umfasst einen Schalthebel, der mit einer Schaltwelle gekoppelt ist, so dass die Schaltwelle axial und rotatorisch bewegt werden kann, um einen Wähl- und Schaltvorgang entlang eines H-Schaltbildes zu realisieren. Um ein unbeabsichtigtes Anwählen einer Rückwärtsgang-Schaltgasse zu verhindern, ist als Rückwärtsgangsperre ein von der Schaltwelle betätigtes Führungselement vorgesehen, welches mit einer Sperrhülse zum unbeabsichtigten Schalten des Rückwärtsganges in Wirkverbindung gebracht wird. Da ein Anwählen der Vorwärtsgang-Schaltgassen aus der Rückwärtsgang-Schaltgasse federunterstützt ist, kann unbeabsichtigt aus der Rückwärtsgang-Schaltgasse in die höheren Vorwärtsgang-Schaltgassen gewählt und dann geschaltet werden. Aufgrund der hohen Relativgeschwindigkeiten zwischen dem zu synchronisierenden Bauteilen wird in diesem Fall die Synchronisierung überlastet und beschädigt oder zerstört.

Der vorliegenden Erfindung liegt die Aufgabe zu Grunde, eine Schaltvorrichtung für ein Fahrzeuggetriebe der eingangs beschriebenen Gattung vorzuschlagen, bei der neben der Absicherung der Rückwärtsgang-Schaltgasse auch das Anwählen von höheren Vorwärtsgang-Schaltgassen aus der Rückwärtsgang-Schaltgasse sicher vermieden wird.

Diese Aufgabe wird erfindungsgemäß durch die Merkmale des Patentanspruches 1 gelöst, wobei sich vorteilhafte Ausgestaltungen aus den Unteransprüchen und den Zeichnungen sowie aus der dazugehörigen Beschreibung ergeben.

Somit wird eine Schaltvorrichtung für ein Fahrzeuggetriebe mit zumindest drei Schaltgassen mit oder ohne Kriechgang vorgeschlagen, wobei dem Getriebe auch eine Bereichsgruppe zum Beispiel als nachgeschaltete Planetengruppe oder dergleichen zugeordnet sein kann. Die erfindungsgemäße Schaltvorrichtung umfasst zumindest eine Schaltwelle, durch deren Axialbewegungen eine Schaltgasse wählbar und durch deren Drehbewegung in der gewählten Schaltgasse eine Gangstufe schaltbar ist. Zur Absicherung einer Rückwärtsgang und/oder Kriechgang-Schaltgasse kann ein erstes Sperrelement vorgesehen sein. Um das Anwählen aus der Rückwärtsgang-Schaltgasse über die benachbarte Vorwärtsgang-Schaltgasse hinaus und auch umgekehrt sicher zu verhindern, ist zumindest ein zweites Sperrelement vorgesehen. Das zweite Sperrelement kann unabhängig von dem ersten Sperrelement betätigt werden bzw. wirken, um die Axialbewegung der Schaltwelle derart einzuschränken, dass die unerwünschten Anwahlvorgänge sicher verhindert bzw. gesperrt werden.

Mit den unabhängig voneinander wirkenden Sperrelementen kann zum Beispiel nach dem Schalten aus dem Rückwärtsgang bzw. aus dem Kriechgang nach Neutral die Wählmöglichkeit in die Schaltgasse der höheren Vorwärtsgänge wie zum Beispiel der Schaltgasse 3/4 bei der erfindungsgemäßen Schaltvorrichtung immer gesperrt werden. Ebenso kann nach dem Schalten aus dem dritten Gang oder dem vierten Gang nach Neutral die Wahlmöglichkeit in die Rückwärtsgang- oder Kriechgang-Schaltgasse immer gesperrt sein. In vorteilhafter Weise stehen nach dem vollständigen Schalten in den ersten Gang und dem anschließenden Neutralschalten sämtliche Anwahlmöglichkeiten wieder zur Verfügung. Wenn nur ein Teilschalten erfolgt ist, d. h., die Schaltbewegung in den ersten Gang wird nicht vollständig ausgeführt und anschließend wieder nach Neutral geschaltet, steht bei der erfindungsgemäßen Schaltvorrichtung nur die Rückwärtsgang-Kriechgang-Schaltgasse offen. Die Schaltgasse für die höheren Vorwärtsgänge, zum Beispiel die Schaltgasse 3/4 ist nach wie vor gesperrt.

Ein besonderer Vorteil der vorgeschlagenen Schaltvorrichtung liegt auch darin, dass zwischen den Vorwärtsgängen beliebig gestaltet werden kann, das bedeutet, es können auch Gangstufen übersprungen werden. Dies ist beispielsweise notwendig, damit beim Umschalten von der schnellen Bereichsgruppe in die langsame Bereichsgruppe oder umgekehrt eine lückenlose und harmonische Schaltfolge möglich ist. Zum Beispiel muss ein Schaltvorgang bei einem Getriebe mit nachgeschaltetem Bereichsgruppengetriebe von dem vierten Gang in den fünften Gang zugelassen werden, welches einer Schaltung von dem vierten Gang in den ersten Gang im Grundgetriebe entspricht, wobei die Bereichsgruppe von der langsamen in die schnelle Gruppe geschaltet wird.

Die erfindungsgemäße Absicherung der höheren Vorwärtsgang-Schaltgassen, zum Beispiel der Schaltgasse 3/4, und die Absicherung der Rückwärtsgang/Kriechgang-Schaltgasse kann im Wesentlichen dadurch erreicht werden, dass ein von der Schaltwelle vorstehender Sperrstift oder dergleichen entlang der sowohl an dem ersten Sperrelement als auch an dem zweiten Sperrelement vorgesehenen Funktions- bzw. Steuerabschnitten der koaxial zueinander angeordneten Sperrelemente derart geführt wird, dass die Bewegungen der Schaltwelle eingeschränkt werden, sodass nach dem Schalten aus dem Rückwärtsgang oder dem Kriechgang nach Neutral die Wahlmöglichkeit in die Schaltgasse 3/4 und nach dem Schalten von dem dritten Gang oder vierten Gang nach Neutral die Wahlmöglichkeit in die Rückwärtsgang/Kriechgang-Schaltgasse gesperrt sind.

Die Steuer- bzw. Funktionsabschnitte oder -flächen können auf beliebige Art und Weise an den zum Beispiel zylindrisch ausgeführten Sperrelementen bzw. Sperrhülsen vorgesehen werden. Beispielsweise können Ausnehmungen, Aussparungen oder dergleichen an dem Mantel bzw. an der Wandung jedes Sperrelement vorgesehen werden, um die Steuerkanten bzw- flächen zu bilden. Der Sperrstift durchdringt bzw. durchläuft radial die zumindest abschnittsweise in Überdeckung liegenden Ausnehmungen am Umfangsbereich der Sperrelemente, sodass aufgrund der axial festen Anordnung der Sperrelemente an dem Gehäuse nur eine vorbestimmte axiale Bewegung der Schaltwelle zulassen wird.

Die mögliche Drehbewegung bzw. Tangentialbewegung der Sperrelemente kann in vorbestimmten Positionen rastiert werden, da die Sperrelemente mit zum Beispiel Kugelrasten oder dergleichen ausgerüstet sind, wobei die Kugelrasten zum Beispiel mehreren Rastierkerben an dem Außenumfang der Sperrelemente zugeordnet sind. Die Verwendung von Kugelrasten bietet einen sicheren und wartungsfreien Betrieb. Jedoch sind auch andere Rastiermöglichkeiten einsetzbar.

Nachfolgend wird die vorliegende Erfindung anhand der Zeichnungen weiter erläutert. Es zeigen:
- Fig. 1: eine dreidimensionale, geschnittene Ansicht einer möglichen Ausführungsvariante einer erfindungsgemäßen Schaltvorrichtung mit einem zugeordneten Schaltbild;
- Fig. 2: eine weitere dreidimensionale, geschnittene Ansicht der Schaltvorrichtung gemäß Fig. 1;
- Fig. 3: eine in eine Ebene projizierte Teilansicht der Schaltvorrichtung mit an der Schaltwelle vorgesehenen Sperrelementen;
- Fig. 4: eine Einzelteilansicht eines ersten Sperrelementes gemäß Fig. 3;
- Fig: 5: eine Einzelteilansicht eines zweiten Sperrelementes gemäß Fig. 3;
- Fig. 6A-G: ein möglicher Wähl- und Schaltablauf einer Rückwärtsgangschaltung aus der Schaltgasse 3-4 mit erfindungsgemäßer Sperrfunktion;
- Fig. 7A-H: ein möglicher Wähl- und Schaltablauf in die Schaltgasse 3-4 entlang eines oberen durch Funktionsabschnitte gebildeten Kanals des zweiten Sperrelementes;
- Fig. 8A-H: ein möglicher Wähl- und Schaltablauf in die Schaltgasse 3-4 entlang eines unteren durch Funktionsabschnitten gebildeten Kanals des zweiten Sperrelementes; und
- Fig. 9A-B: ein möglicher Ablauf einer Kriechgangschaltung.

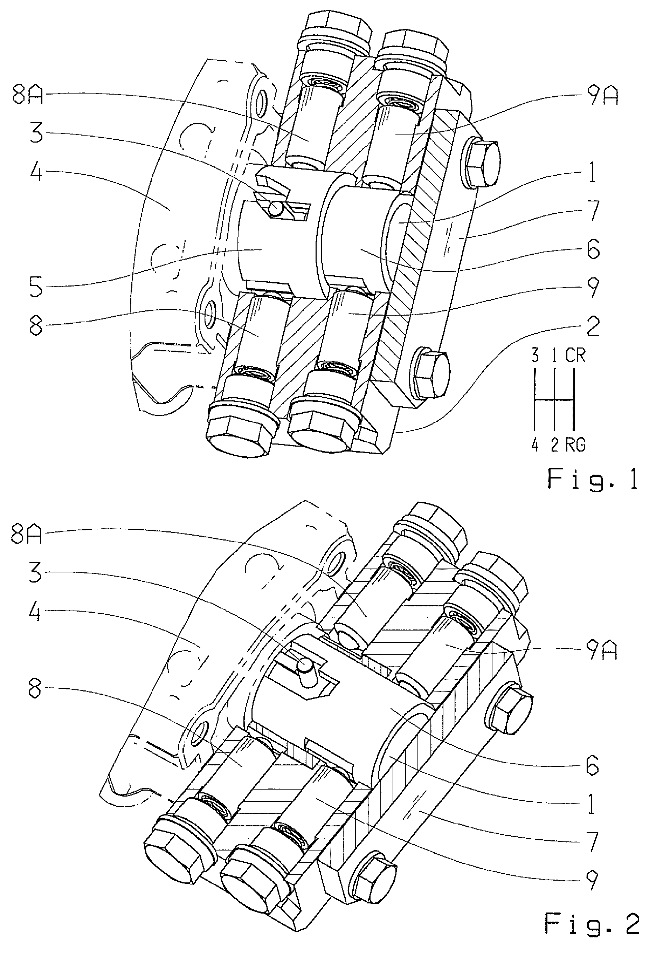

In den Fig. 1 und 2 ist eine mögliche Ausführungsvariante der erfindungsgemäßen Schaltvorrichtung exemplarisch für ein Getriebe mit drei Schaltgassen dargestellt, wobei ein Kriechgang CR ebenfalls vorgesehen ist, der in der gleichen Gasse wie der Rückwärtsgang RG liegt, welches sich aus dem in Fig. 1 beispielhaft dargestellten Schaltbild ergibt.

Die Schaltvorrichtung umfasst im Wesentlichen eine Schaltwelle 1, die in zumindest einem Gehäuse 2 axial verschiebbar und drehbar gelagert ist, wobei durch eine axiale Bewegung der Schaltwelle 1 eine gewünschte Schaltgasse wählbar und durch eine Drehbewegung der Schaltwelle 1 in der gewählten Schaltgasse eine Gangstufe schaltbar ist. Die Schaltwelle 1 weist einen im Wesentlichen quer bzw. radial vorstehenden Sperrstift 3 auf, der fest mit der Schaltwelle 1 zum Beispiel durch Einpressen oder dergleichen verbunden ist und somit die Axialbewegungen und die Drehbewegungen der Schaltwelle 1 mit ausführt. Das Gehäuse 2 ist z. B. an dem Schaltgehäuse 4 befestigt und weist einen nur teilweise dargestellten Deckel 7 auf. Das Schaltgehäuse 4 weist weitere nicht dargestellte Elemente der Schaltvorrichtung beispielsweise zum Umsetzen der von der Schaltwelle 1 ausgeführten Wähl- und Schaltbewegungen in dem Getriebe auf.

Die erfindungsgemäße Schaltvorrichtung umfasst ferner ein erstes Sperrelement 5 und ein zweites Sperrelement 6, die etwa zylinderförmig bzw. hülsenförmig ausgebildet sind. Die beiden Sperrelemente 5, 6 sind koaxial zur Schaltwelle 1 in dem Gehäuse 2 axial fest gelagert, wobei die Sperrelemente 5, 6 jeweils unabhängig voneinander Drehbewegungen im Bereich von 10-20° vorzugsweise +/-15° ausführen können. Dazu sind beide Sperrelemente 5, 6 im Gehäuse 2 radial gelagert. Die axiale Lagerung erfolgt an einem Ende des ersten Sperrelementes 5 am Gehäuse 2 und an dem anderen Ende des Sperrelementes 5 an dem Schaltgehäuse 4. Das zweite Sperrelement 6 ist radial am Gehäuse 2 und axial zum einen am Deckel 7 und zum anderen über ein Axiallager des Schaltgehäuses 4 gelagert. Die beiden Sperrelementen 5, 6 müssen radial derart voneinander beabstandet sein, dass eine Berührung ausgeschlossen ist, da die Sperrelementen 5, 6 unabhängig voneinander verdrehbar sind.

Die koaxial zur Schaltwelle 1 angeordneten Sperrelemente 5, 6 sind derart ineinander angeordnet, dass das erste Sperrelement 5 radial außen und das zweite Sperrelement 6 radial innen vorgesehen sind, wobei das zweite Sperrelement 6 in axialer Richtung breiter ausgeführt ist als das radial äußere, erste Sperrelement 5, welches sich insbesondere aus der Darstellung gemäß Fig. 1 ergibt. In Fig. 2 ist das erste Sperrelement 5 geschnitten dargestellt, so dass in dieser Darstellung das zweite Sperrelement 6 vollständig sichtbar ist.

Zum Fixieren bzw. Rastieren von vorbestimmten Drehpositionen der einzelnen Sperrelemente 5, 6 sind jedem Sperrelement 5, 6 zwei Kugelrasten 8, 8A bzw. 9, 9A zugeordnet, die durch Federkraft in entsprechende Rastierkerben A, B bzw. D, E, F am Umfangsbereich des jeweiligen Sperrelementes 5, 6 gedrückt werden, wobei die Rastierkerben A, B bzw. D, E, F in Umfangsrichtung im Wesentlichen nebeneinander bei den zugeordneten Sperrelementen 5, 6 angeordnet sind. Die in den Fig. 1 und 2 angedeuteten Kugelrasten 8, 8A bzw. 9, 9A sind jeweils gegenüberliegend, also in einem Winkel von 180° zueinander jedem Sperrelement 5, 6 zugeordnet. Dies deshalb, da dadurch ein Querkraftausgleich erfolgt und so die Reibung in den Radiallagern minimiert wird. Ferner wird durch unterschiedliche Gestaltung der Rastierkerben A, B bzw. D, E, F eine Asymmetrie bei den Rastierverhältnissen erreicht.

Ferner sind in Fig. 1 Funktionskanten bzw. Funktionsflächenabschnitte an dem ersten Sperrelement 5 und teilweise an dem zweiten Sperrelement 6 zu erkennen. Die Funktionsabschnitte werden durch entsprechende Ausnehmungen in der Wandung der Sperrelemente 5, 6 am Umfangsbereich der Sperrelemente 5, 6 gebildet. Die Ausnehmungen sind dabei derart vorgesehen, dass die Funktionsabschnitte der koaxial ineinander angeordneten Sperrelemente 5, 6 zumindest bereichsweise in Überdeckung sind. In Fig. 2 ist das erste Sperrelement 5 teilgeschnitten dargestellt, so dass die Steuerkantenabschnitte des zweiten Sperrelementes 6 nun vollständig sichtbar sind.

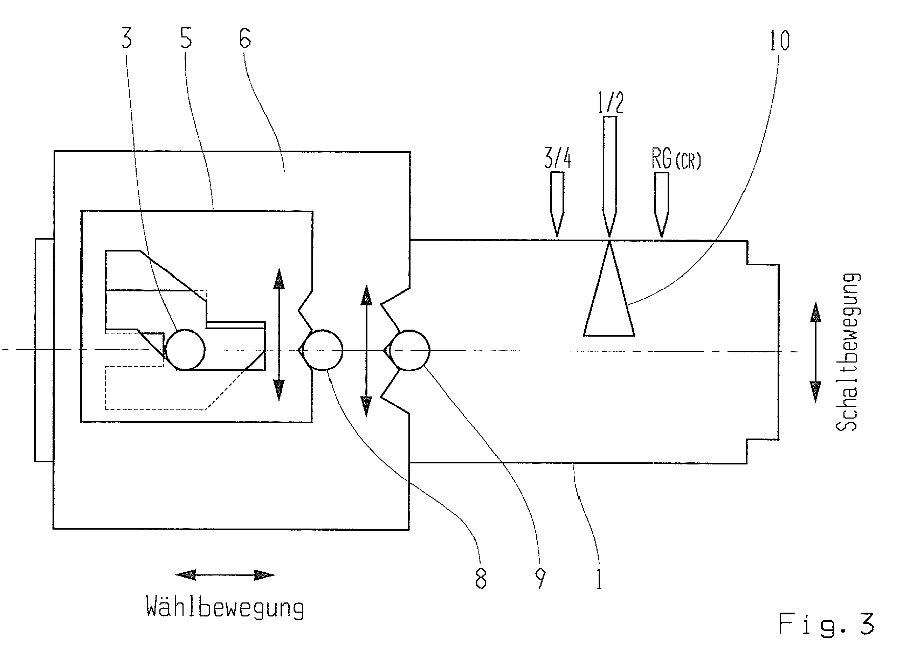

Die Fig. 3 bis 5 zeigen jeweils Ansichten, bei denen die Schaltwelle 1 und die beiden Sperrelemente 5, 6 in die Ebene projiziert dargestellt sind. Jedes der Sperrelemente 5, 6 weist vorzugsweise z. B. flächige Steuerkantenabschnitte auf, die nachfolgend als Steuerkanten SK bezeichnet sind.

In hier nicht gezeigten Ausführungsformen ist auch eine Ausbildung der Sperrelemente 5, 6 derart möglich, dass die Sperrelemente 5, 6 nicht als drehbare Hülsen um die Schaltwelle 1 angeordnet sind, sondern plattenförmig derart im Gehäuse 2 gelagert sind, dass sie eine tangentiale Bewegung relativ zur Schaltwelle 1 durchführen können, wobei sie durch den Sperrstift 3 verschoben werden. Die Sperrelemente sind dann entsprechend der auf den Sperrelementen 5, 6 in Fig.3 dargestellten Doppelpfeilen seitlich verschiebbar, aber axial entlang der Wählbewegung der Schaltwelle 1 festgelegt.

Um die Bewegungen der Schaltwelle 1 über die Sperrelemente 5, 6 beeinflussen zu können, steht der Sperrstift 3 der Schaltwelle 1 in Wirkverbindung mit den Sperrelementen 5, 6, indem der Sperrstift 3 entlang der Steuerkantenabschnitte bzw. der Funktionskantenabschnitte der Sperrelemente 5, 6 geführt wird, wie dies in Fig. 3 angedeutet ist. Dadurch ist es möglich, dass sowohl die Rückwärtsgang-Kriechgang-Schaltgasse RG/CR als auch die höheren Vorwärtsgang-Schaltgassen, insbesondere die Schaltgasse 3/4 abgesichert werden.

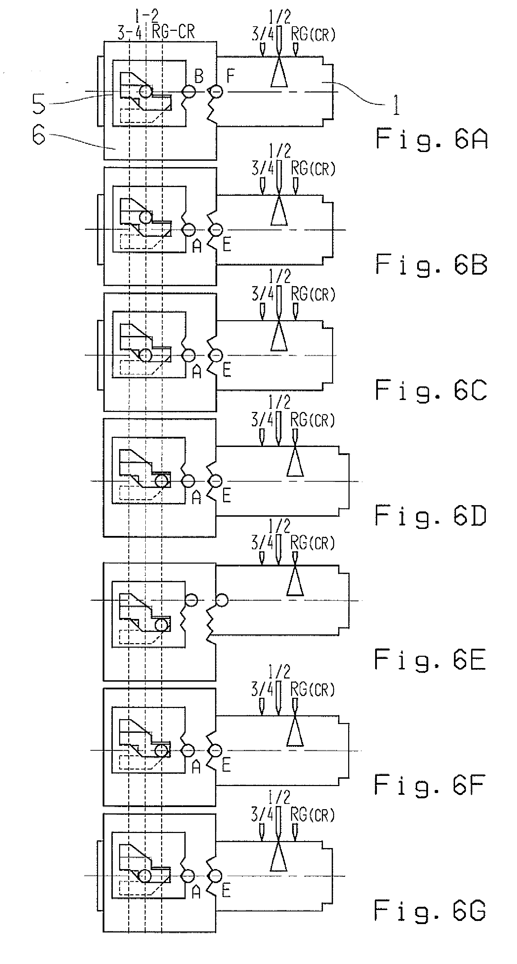

In Fig. 3 sind die Richtungen der Wählbewegungen und der Schaltbewegungen der Schaltwelle 1 jeweils durch Doppelpfeile angedeutet. Die Sperrelemente 5, 6 sind axial fest und drehbar bzw. tangential bewegbar, welches in der Darstellung gemäß Fig. 3 nur als senkrechte Linearbewegung sichtbar ist, welches durch Doppelpfeile an den Sperrelementen 5, 6 angedeutet ist. Die den Sperrelementen 5, 6 zugeordneten Rastierungen bzw. Kugelrasten 8, 8A bzw. 9, 9A sind in Fig. 3 lediglich schematisch dargestellt, wobei jeweils nur die Kugel der Kugelrasten 8, 9 sichtbar sind. Die Kugelrasten 8, 8A bzw. 9, 9A sind nur entlang der Mittelachse der Schaltwelle 1 beweglich und werden von den nicht weiter dargestellten Druckfedern in die Rastierkerben A, B bzw. D, E, F am Umfangsbereich des jeweiligen Sperrelement 5, 6 gedrückt. Zum besseren Erkennen der Wählposition der Schaltwelle 1 bzw. des Sperrstiftes 3 ist eine Skala angebracht, welche die Lage der Gassen bezeichnet. Auf der Schaltwelle 1 befindet sich ein Gassenzeiger 10. Mit diesem kann die jeweilige Position der Schaltwelle 1 erkannt werden. Diese Anzeige ist der Übersicht wegen auch bei den Fig. 6, 7, 8 und 9 vorgesehen.

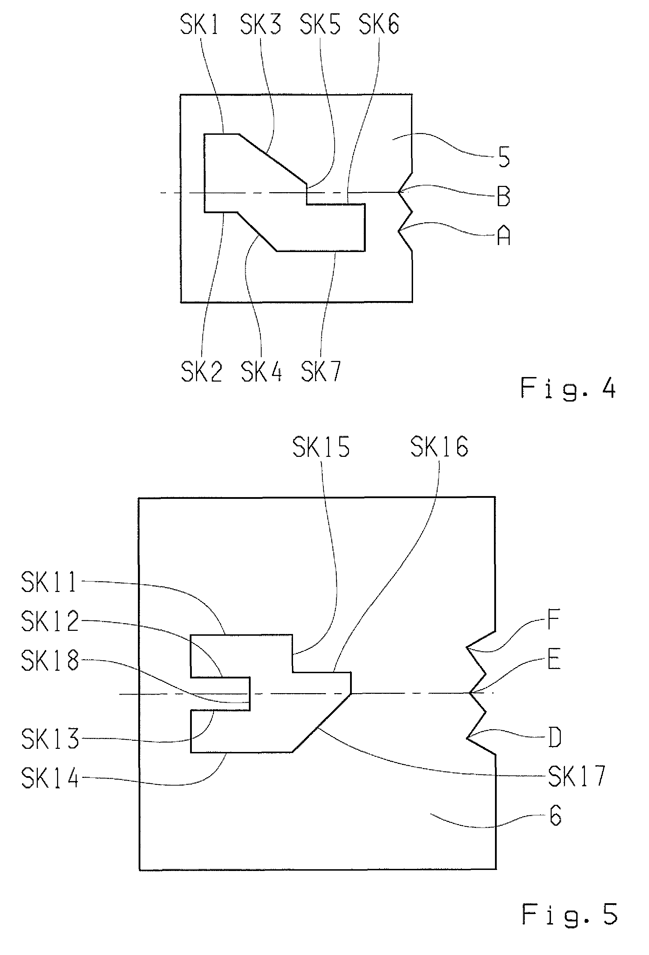

Aus Fig. 4 ergibt sich die detaillierte Ausführung der Steuerkantenabschnitte und der Rastierkerben A und B am Umfangsbereich des ersten Sperrelementes 5. Das erste Sperrelement 5 weist vorzugsweise sieben Steuerkanten SK 1, SK 2, SK 3, SK 4, SK 5, SK 6 und SK 7 auf, wobei die Steuerkanten SK 1, SK 2, SK 6 und SK 7 im Wesentlichen axial am Umfangsbereich ausgerichtet sind. Die Steuerkanten SK 3 und SK 4 verlaufen sowohl in axialer als auch in Umfangsrichtung, sodass sich in die Ebene projiziert jeweils eine Schräge ergibt. Die Steuerkante SK 5 verläuft in Umfangsrichtung und dient als Sperrkante bzw. -fläche zum Absichern der RG/CR-Schaltgasse.

Aus Fig. 5 ergibt sich die detaillierte Ausführung der Steuerkantenabschnitte und der Rastierkerben D, E und F am Umfangsbereich des zweiten Sperrelementes 6. Das zweite Sperrelement 6 weist vorzugsweise acht Steuerkanten SK 11, SK 12, SK 13, SK 14, SK 15, SK 16, SK 17 und SK 18 auf. Dabei bilden die Steuerkanten SK 11 und SK 12 einen oberen axial ausgerichteten Führungs-Kanal und die Steuerkanten SK 13 und SK 14 einen unteren axial ausgerichteten Führungs-Kanal. Deshalb können die Steuerkanten SK 11 und SK 12 sowie die Steuerkanten SK 13 und SK 14 jeweils zusammengefasst werden. Die Steuerkante SK 16 verläuft ebenfalls etwa axial am Umfangsbereich des Sperrelementes 6, wobei die Steuerkanten SK 15 und SK 18 in Umfangsrichtung verlaufen. Die Steuerkante SK 15 dient als Sperrkante bzw. -fläche zur Absicherung der RG/CR-Schaltgasse und die Steuerkante SK 18 dient als Sperrkante bzw. -fläche zur Absicherung der 3/4-Schaltgasse. Die Steuerkante SK 17 verläuft sowohl in axialer als auch in Umfangsrichtung und bildet in die Ebene projiziert eine Schräge.

Die einzelnen Funktionen der genannten Steuerkanten SK 1 bis 7 bzw. SK 11 bis SK 18 werden im Rahmen der Schaltabläufe gemäß Fig. 6, 7, 8 und 9 weiter beschrieben.

In den Fig. 6A bis 6G ist ausgehend von der Schaltgasse 3/4 in Neutral, welches jedoch in Fig. 6A nicht dargestellt ist, die Schaltung in den Rückwärtsgang mit der erfindungsgemäßen Sperrfunktion dargestellt. Vorzugsweise wird die Schaltvorrichtung angefedert verwendet, wodurch sich in einem nicht betätigten Zustand die Schaltwelle 1 bzw. der mit der Schaltwelle 1 verbundene Sperrstift 3 in der Position Schaltgasse 3/4 in Neutral befindet. In der in Fig. 6A dargestellten Ausgangsstellung ist die Schaltwelle 1 bereits der Schaltgasse 1/2 in Neutral zugeordnet. Das zweite Sperrelement 6 ist in der Rastierkerbe F und das erste Sperrelement 5 ist in der Rastierkerbe B rastiert. Die Bewegung des Sperrstiftes 3 in die Schaltgasse RG/CR wird über die Steuerkante SK 15 des zweiten Sperrelementes 6 gesperrt. Die Steuerkante SK 5 des ersten Sperrelementes 5 befindet sich ebenfalls in Sperrstellung. Somit ist die Schaltgasse RG/CR abgesichert.

In Fig. 6B folgt ein Teilschalten in der Schaltgasse 1/2 in Richtung des ersten Ganges. Hierbei wird das zweite Sperrelement 6 über den Sperrstift 3 und die Steuerkante SK 11 bewegt und in der Rastierkerbe E rastiert. Das erste Sperrelement 5 wird über den Sperrstift 3 und über die Steuerkante SK 3 bewegt und in der Rastierkerbe A rastiert.

Anschließend erfolgt das Zurückschalten in der Schaltgasse 1/2 nach Neutral, welches in Fig. 6C angedeutet ist. Die Position der Sperrelemente 5 und 6 bleibt unverändert. Die Wählmöglichkeit in die Schaltgasse 3/4 ist über die Steuerkante SK 18 des zweiten Sperrelementes 6 gesperrt und die Wählmöglichkeit in die Schaltgasse RG/CR ist möglich. In Fig. 6D ist das Wählen in die Schaltgasse RG/CR dargestellt. In Fig. 6E wird der Schaltvorgang in den Rückwärtsgang RG gezeigt, wobei die beiden Sperrelemente 5, 6 in diesem Zustand nicht rastiert sind. Fig. 6F stellt die Zurückschaltung aus dem Rückwärtsgang nach Neutral dar. Die Kugelrasten 8, 8A bzw. 9, 9A der beiden Sperrelemente 5, 6 sind in den Rastierkerben A bzw. E fixiert. Schließlich ist in Fig. 6G das Wählen in die Schaltgasse 1/2 dargestellt. Die Schaltgasse 3/4 ist wiederum über die Steuerkante SK 18 des zweiten Sperrelementes 6 gesperrt. Dies bedeutet, dass nur eine Schaltung in den ersten Gang oder den zweiten Gang 1-2 möglich ist. Demzufolge ist die Schaltgasse 3/4 abgesichert.

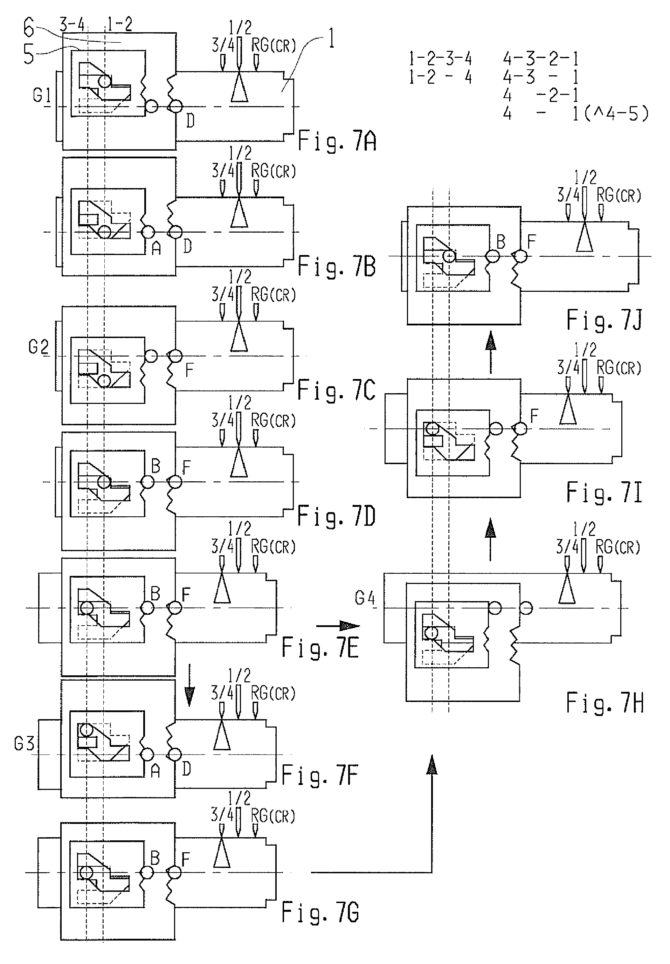

Die Fig. 7A bis 7H zeigen einen möglichen Schalt- bzw. Wählablauf zwischen dem ersten Gang und dem vierten Gang über den oberen Kanal, der durch die Steuerkanten SK 11 und SK 12 des zweiten Sperrelementes 6 gebildet wird. Wie in Fig. 7A angegeben, sind über den oberen Kanal des zweiten Sperrelementes 6 sequenzielle Schaltungen von dem ersten Gang bis zum vierten Gang 1-2-3-4 oder umgekehrt 4-3-2-1 möglich. Ferner sind Schaltungen von dem ersten in den zweiten Gang und dann in den vierten Gang 1-2-4 möglich. Ferner ist auch eine Schaltung von dem vierten in den dritten und dann in den ersten Gang 4-3-1 möglich. Beispielsweise kann auch von dem vierten in den zweiten und dann in den ersten Gang 4-2-1 geschaltet werden. Zum Schalten von dem vierten in den fünften Gang 4-1 (^4-5) wird in dem Grundgetriebe von dem vierten in den ersten Gang geschaltet und die Bereichsgruppe mit der schnellen Übersetzung aktiviert.

In Fig. 7A wird in den ersten Gang geschaltet. Dabei wird das erste Sperrelement 5 über die Steuerkante SK 3 bewegt und nicht rastiert. Das zweite Sperrelement 6 wird über die Steuerkante SK 11 bewegt und in der Rastierkerbe D rastiert. In Fig. 7B ist das Schalten aus der Schaltgasse 1/2 nach Neutral dargestellt. Dabei wird das erste Sperrelement 5 mit dem Sperrstift 3 über die Steuerkante SK 7 bewegt und in der Rastierkerbe A rastiert. Das zweite Sperrelement 6 bleibt in der Rastierkerbe D unverändert. Somit sind alle Schalt- und Wahlmöglichkeiten offen. Beispielsweise kann in den zweiten Gang geschaltet werden. Es ist auch möglich, dass die Schaltgasse RG/CR oder die Schaltgasse 3/4 angewählt wird. Als Führung für die Schaltgasse 1/2 kann es erforderlich sein, eine Feder mit Buchse zu verwenden, die die Bewegungen der Schaltwelle 1 unterstützt. Der bekannte Rückwärtsgang-Riegel bzw. die Rückwärtsgangsperre, die bei bekannten Schaltvorrichtungen unbedingt erforderlich ist, kann bei der erfindungsgemäßen Schaltvorrichtung entfallen, so dass damit in vorteilhafter Weise kein Unterschied zwischen statischem und dynamischem Wählen bei der erfindungsgemäßen Schaltvorrichtung auftritt.

Wird in dieser Stellung in die Schaltgasse RG/CR gewählt, so bleibt das erste Sperrelement 5 in seiner Position unverändert, wobei das zweite Sperrelement 6 über den Sperrstift 3 und über die Steuerkante SK 17 bewegt und in der Rastierkerbe E rastiert wird. Die Wahlmöglichkeit in die Schaltgasse 3/4 ist über die Steuerkante SK 18 gesperrt. Diese Position entspricht der Fig. 6D.

Fig. 7C zeigt das Schalten in den zweiten Gang. Dabei wird das erste Sperrelement 5 über den Sperrstift 3 und die Steuerkante SK 7 bewegt. Das zweite Sperrelement 6 wird über die Steuerkante SK 14 bewegt. Das erste Sperrelement 5 wird nicht rastiert, wobei das zweite Sperrelement 6 in der Rastierkerbe F rastiert ist. Das Zurückschalten aus der Schaltgasse 1/2 nach Neutral wird in Fig. 7D dargestellt. Dabei bleibt das zweite Sperrelement 6 in seiner Position und sperrt über die Steuerkante SK 15 das Wählen in die Schaltgasse RG/CR und gibt über den oberen Kanal, der durch die Steuerkanten SK 11 und SK 12 gebildet wird, das Wählen in die Schaltgasse 3/4 frei. Das erste Sperrelement 5 wird über den Sperrstift 3 und über die Steuerkante SK 3 bewegt und in der Rastierkerbe B rastiert. Anschließend wird die Schaltwelle 1 axial verschoben und mit dem Sperrstift 3 in die Schaltgasse 3/4 gewählt, welches der Fig. 7E entspricht. Die Positionen der beiden Sperrelemente 5, 6 bleiben unverändert.

Nun ergeben sich zwei Möglichkeiten. Gemäß Fig. 7F kann beispielsweise in den dritten Gang geschaltet werden. Anschließend wird in der Schaltgasse 3/4 nach Neutral geschaltet, welches der Fig. 7G entspricht. Dabei wird das erste Sperrelement 5 über den Sperrstift 3 und die Steuerkante SK 2 bewegt und in der Rastierkerbe B rastiert, wobei das zweite Sperrelement 6 über den Sperrstift 3 und die Steuerkante SK 12 in der Rastierkerbe F rastiert wird. Die Wählbewegung in die Schaltgasse 1/2 ist nun freigegeben, wobei jedoch die Schaltgasse RG/CR über die Steuerkante SK 15 und die Steuerkante 5 gesperrt ist. Anschließend ist es möglich, in den vierten Gang zu schalten, wobei die beiden Sperrelemente 5, 6 nicht rastiert sind, welches in der Fig. 7H dargestellt ist.

Es ist auch möglich, ausgehend von dem Zustand gemäß Fig. 7E direkt in den vierten Gang zu schalten (Fig. 7H). Anschließend wird in der Schaltgasse 3/4 nach Neutral geschaltet, wobei das erste Sperrelement 5 über den Sperrstift 3 und über die Steuerkante SK 1 bewegt wird und wobei das zweite Sperrelement 6 über den Sperrstift 3 und die Steuerkante SK 11 bewegt wird. Das erste Sperrelement 5 wird nicht rastiert, wobei das zweite Sperrelement 6 in der Rastierkerbe F gemäß Fig. 7I rastiert wird. Das Wählen in die Schaltgasse 1/2 ist möglich, wobei das Wählen in die Schaltgasse RG/CR über die Steuerkante SK 15 und die Steuerkante SK 5 gesperrt ist. Das Anwählen der Schaltgasse 1/2 wird gemäß Fig. 7J angedeutet. Dazu wird das erste Sperrelement 5 über den Sperrstift 3 und über die Steuerkante SK 3 verdreht und in der Rastierkerbe B rastiert, wobei das zweite Sperrelement 6 unverändert bleibt.

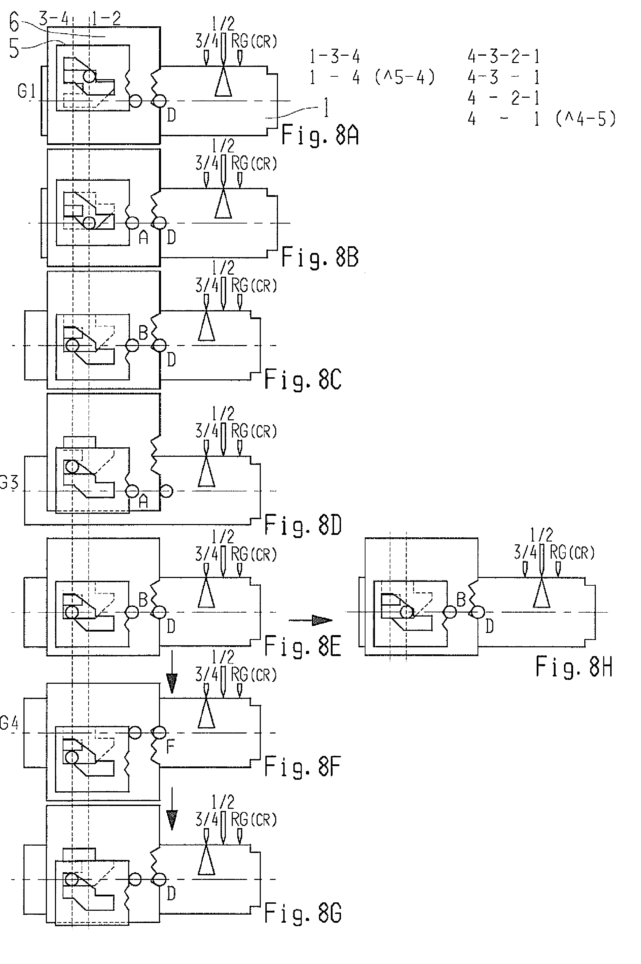

Fig. 8A bis 8H zeigen einen möglichen Schalt- bzw. Wählablauf zwischen dem ersten Gang und dem vierten Gang über den unteren Kanal, der durch die Steuerkanten SK 13 und SK 14 bei dem zweiten Sperrelement 6 gebildet wird. Wie in Fig. 8A angegeben, sind sequenzielle Schaltungen über den unteren Kanal des zweiten Sperrelementes 6 zwischen dem ersten und dem vierten Gang oder umgekehrt 4-3-2-1 möglich. Ferner ist die Schaltung vom ersten über den dritten in den vierten Gang 1-3-4 und umgekehrt möglich. Es ist auch denkbar, dass aus dem vierten Gang über den zweiten in den ersten Gang 4-2-1 geschaltet wird. Bei einer Schaltung vom fünften in den vierten Gang 1-4 (^5-4) wird in dem Grundgetriebe aus dem ersten in den vierten Gang geschaltet, wobei die Bereichsgruppe für die langsame Übersetzung aktiviert wird. Es ist auch die umgekehrte Schaltung vom vierten in den fünften Gang 4-1 (^4-5) möglich.

In Fig. 8A ist eine Ausgangsstellung dargestellt, in der sich die Schaltvorrichtung im ersten Gang befindet. Beim Schalten in der Schaltgasse 1/2 nach Neutral wird das erste Sperrelement 5 in der Rastierkerbe A rastiert, wobei das zweite Sperrelement 6 in der Rastierkerbe D verbleibt. Dies ist in Fig. 8B dargestellt. In dieser Stellung besteht die Schaltmöglichkeit in den zweiten Gang und die Wahlmöglichkeit in die Schaltgasse 3/4 oder auch in die Schaltgasse RG/CR. Gemäß Fig. 8C ist das Wählen in die Schaltgasse 3/4 dargestellt. Dazu wird das erste Sperrelement 5 über die Steuerkante SK 4 bewegt und in der Rastierkerbe B rastiert, wobei das zweite Sperrelement 6 unverändert bleibt.

Das Schalten in den dritten Gang ist gemäß Fig. 8D dargestellt. Fig. 8E zeigt das Schalten in der Schaltgasse 3/4 nach Neutral. Dazu wird das erste Sperrelement 5 über den Sperrstift 3 der Schaltwelle 1 und über die Steuerkante SK 2 in der Rastierkerbe B rastiert. Das zweite Sperrelement 6 wird über die Steuerkante SK 14 in der Rastierkerbe D rastiert. In dieser Stellung ist die Wählmöglichkeit in die Schaltgasse 1/2 möglich und die Wahlmöglichkeit in die Schaltgasse RG/CR über die Steuerkante SK 5 gesperrt, welches in Fig. 8H dargestellt ist.

Das Schalten in den vierten Gang ist in Fig. 8F gezeigt. Das Schalten in der Schaltgasse 3/4 nach Neutral wird in Fig. 8G angedeutet. Dazu wird das erste Sperrelement 5 über die Steuerkante SK 1 und das zweite Sperrelement 6 über die Steuerkante SK 13 bewegt. Das erste Sperrelement 5 wird nicht rastiert, wobei das zweite Sperrelement 6 in der Rastierkerbe D rastiert ist. In diesem Zustand ist das Wählen in die Schaltgasse 1/2 möglich, wobei das Wählen in die Schaltgasse RG/CR über die Steuerkante SK 5 gesperrt ist, wie in Fig. 8H angedeutet.

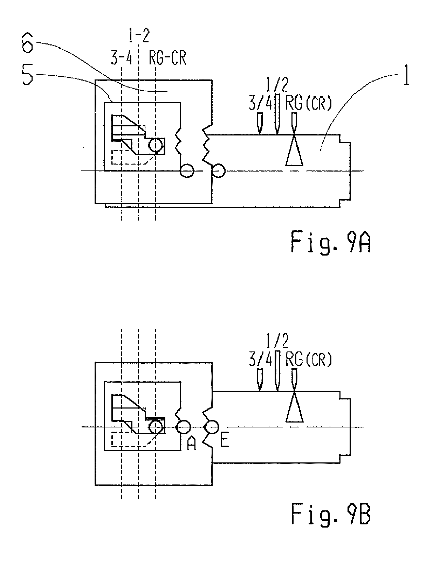

In den Fig. 9A und 9B ist ein möglicher Ablauf dargestellt, bei dem in den Kriechgang CR geschaltet wird. Die Ausgangsstellung ist in Fig. 6F dargestellt, in der sich der Sperrstift 3 der Schaltwelle 1 in Neutral im Bereich der Schaltgasse RG/CR befindet. Das Schalten in den Kriechgang CR ist in Fig. 9A dargestellt. Zum Schalten nach Neutral wird das erste Sperrelement 5 über die Steuerkante SK 7 und das zweite Sperrelement 6 über die Steuerkante SK 10 bewegt. Das erste Sperrelement 5 wird in der Rastierkerbe A und das zweite Sperrelement 6 in der Rastierkerbe E rastiert, welches in Fig. 9B dargestellt ist. Die Wählbewegung aus der Schaltgasse RG/CR in die Schaltgasse 1/2 ist möglich. Jedoch wird die Wählmöglichkeit aus der Schaltgasse RG/CR in die Schaltgasse 3/4 über die Steuerkante 18 gesperrt.

Die vorbeschriebenen Funktionsbeschreibungen sind für mögliche Hochschaltungen vorgesehen. Für Rückschaltungen gilt sinngemäß dasselbe nur in anderer Reihenfolge.

Die Arbeitsweise der erfindungsgemäßen Schaltvorrichtung ist beispielhaft an einem Getriebe mit drei Schaltgassen RG/CR, 1/2 und 3/4 mit nachgeschalteter Bereichsgruppe beschrieben worden. Jedoch ist die erfindungsgemäße Schaltvorrichtung auch für Getriebe mit vier Schaltgassen geeignet, bei dem beispielsweise keine Planetengruppe bzw. Bereichsgruppe nachgeschaltet ist, so dass eventuell ein Sperrelement entfallen kann. Die Schaltvorrichtung ist auch bei Getrieben ohne Kriechgang einsetzbar, wobei dann die Steuerkanten, die mit dem Kriechgang in Wechselwirkung stehen, wirkungslos sind bzw. entfallen können.

Es wäre auch denkbar, dass Endanschläge in der Schaltgasse 3/4 und in der Schaltgasse RG/CR von der vorgeschlagenen Schaltvorrichtung realisiert werden. Die erfindungsgemäße Schaltvorrichtung ermöglicht Rastierungen während des Schalt- und des Wählvorganges. Im geschalteten Zustand sind keine Rastierungen erforderlich.

### Bezugszeichen

- 1: Schaltwelle
- 2: Gehäuse
- 3: Sperrstift
- 4: Schaltgehäuse
- 5: erstes Sperrelement
- 6: zweites Sperrelement
- 7: Deckel
- 8,8A: Kugelrasten
- 9,9A: Kugelrasten
- 10: Gassenanzeiger
- RG: Rückwärtsgang
- CR: Kriechgang
- SK 1: Steuerkante 1 des ersten Sperrelements
- SK 2: Steuerkante 2 des ersten Sperrelements
- SK 3: Steuerkante 3 des ersten Sperrelements
- SK 4: Steuerkante 4 des ersten Sperrelements
- SK 5: Steuerkante 5 des ersten Sperrelements
- SK 6: Steuerkante 6 des ersten Sperrelements
- SK 7: Steuerkante 7 des ersten Sperrelements
- SK 11: Steuerkante 11 des zweiten Sperrelements
- SK 12: Steuerkante 12 des zweiten Sperrelements
- SK 13: Steuerkante 13 des zweiten Sperrelements
- SK 14: Steuerkante 14 des zweiten Sperrelements
- SK 15: Steuerkante 15 des zweiten Sperrelements
- SK 16: Steuerkante 16 des zweiten Sperrelements
- SK 17: Steuerkante 17 des zweiten Sperrelements
- SK 18: Steuerkante 18 des zweiten Sperrelements
- A: Rastierkerbe des ersten Sperrelements
- B: Rastierkerbe des ersten Sperrelements
- D: Rastierkerbe des zweiten Sperrelements
- E: Rastierkerbe des zweiten Sperrelements
- F: Rastierkerbe des zweiten Sperrelements
- 1/2: Schaltgasse des ersten und zweiten Ganges
- 3/4: Schaltgasse des dritten und vierten Ganges
- RG/CR: Schaltgasse des Rückwärtsganges und des Kriechganges

## Patentansprüche

1. Schaltvorrichtung für ein Fahrzeuggetriebe mit einer Schaltwelle (1), die in einem Gehäuse axial verschiebbar und drehbar angeordnet ist, wobei durch deren Axialbewegung eine Schaltgasse wählbar und durch deren Drehbewegung in der gewählten Schaltgasse eine Gangstufe schaltbar ist, wobei ein Sperrelement (5) mit der Schaltwelle (1) zur Absicherung einer Rückwärtsgang-Schaltgasse in Wirkverbindung bringbar ist, **dadurch gekennzeichnet, dass** zumindest ein zweites Sperrelement (6) vorgesehen ist, welches unabhängig von dem ersten Sperrelement (5) derart die Bewegung der Schaltwelle (1) beeinflusst, dass aus der Rückwärtsgang-Schaltgasse (RG/CR) nur die benachbarte Vorwärtsgang-Schaltgasse (1/2) anwählbar ist, sodass nächst höhere Vorwärtsgang-Schaltgassen (3/4) gesperrt sind, und aus einer höheren Vorwärtsgang- Schaltgasse (3/4) nur eine benachbarte Vorwärtsgang- Schaltgasse (1/2) anwählbar ist.

2. Schaltvorrichtung nach Anspruch 1, **dadurch gekennzeichnet, dass** die Schaltwelle (1) mit zumindest einem radial vorstehenden Sperrstift (3) verbunden ist, der mit den beiden koaxial zur Schaltwelle (1) angeordneten, etwa zylinderförmigen Sperrelementen (5, 6) zur Absicherung der Rückwärtsgang- und/oder Kriechgang-Schaltgasse (RG/CR) und den höheren Vorwärtsgang-Schaltgassen (3/4) über Funktionsabschnitte in Wirkverbindung steht.

3. Schaltvorrichtung nach Anspruch 2, **dadurch gekennzeichnet, dass** die Funktionsabschnitte durch Ausnehmungen in der Wandung der Sperrelemente (5, 6) gebildet sind, wobei die Ausnehmungen der koaxial ineinander angeordneten Sperrelemente (5, 6) zumindest bereichsweise in Überdeckung sind.

4. Schaltvorrichtung nach Anspruch 3, **dadurch gekennzeichnet, dass** das erste Sperrelement 5 als Funktionsabschnitte sieben Steuerkanten (SK 1, SK 2, SK 3, SK 4, SK 5, SK 6, SK 7) aufweist, wobei das zweite Sperrelement (6) acht Steuerkanten (SK 11, SK 12, SK 13, SK 14, SK 15, SK 16, SK 17, SK 18) als Funktionsabschnitte aufweist.

5. Schaltvorrichtung nach Anspruch 4, **dadurch gekennzeichnet, dass** das unbeabsichtigte Anwählen der Rückwärtsgang und/oder Kriechgang-Schaltgasse (RG/CR) im Wesentlichen über die Steuerkante (SK 5) des ersten Sperrelements (5) und/oder über die Steuerkante (SK 15) des zweiten Sperrelements (6) sperrbar ist, wobei die Steuerkante (SK 5) und die Steuerkante (SK 15) jeweils im Wesentlichen in Umfangsrichtung des zugeordneten Sperrelements (5, 6) verlaufen.

6. Schaltvorrichtung nach Anspruch 4 oder 5, **dadurch gekennzeichnet, dass** das unbeabsichtigte Anwählen der Vorwärtsgang-Schaltgasse (3/4) im Wesentlichen über die Steuerkante (SK 18) des zweiten Sperrelements (6) sperrbar ist, wobei die Steuerkante (SK 18) im Wesentlichen in Umfangsrichtung des Sperrelements (6) verläuft.

7. Schaltvorrichtung nach einem der vorangehenden Ansprüche, **dadurch gekennzeichnet, dass** jedes Sperrelement (5, 6) axial fest aber drehbar in dem Gehäuse (2) gelagert ist.

8. Schaltvorrichtung nach einem der vorangehenden Ansprüche, **dadurch gekennzeichnet, dass** jedem Sperrelement (5, 6) zumindest eine federbelastete Kugelraste (8, 8A; 9, 9A) zugeordnet ist, die das Rastieren der Sperrelemente (5, 6) in vorbestimmten Drehpositionen mittels mehrerer Rastierkerben (A, B; D, E, F) ermöglicht.

9. Schaltvorrichtung nach Anspruch 8, **dadurch gekennzeichnet, dass** das erste Sperrelement (5) zwei Rastierkerben (A, B) und das zweite Sperrelement (6) drei Rastierkerben (D, E, F) am Umfangsbereich aufweisen, wobei die Rastierkerben (A, B; D, E, F) jeweils in Umfangsrichtung nebeneinander bei dem zugeordneten Sperrelement (5, 6) angeordnet sind.

10. Schaltvorrichtung nach einem der vorangehenden Ansprüche, **dadurch gekennzeichnet, dass** das zweite, radial innere Sperrelement (6) in axialer Richtung breiter ausgeführt ist, als das erste, radial äußere Sperrelement (5).

11. Schaltvorrichtung nach Anspruch 1, **dadurch gekennzeichnet, dass** die Schaltwelle (1) mit zumindest einem radial vorstehenden Sperrstift (3) verbunden ist, der mit den beiden tangential zur Schaltwelle (1) angeordneten, etwa plattenförmigen Sperrelementen (5, 6) zur Absicherung der Rückwärtsgang- und/oder Kriechgang-Schaltgasse (RG/CR) und den höheren Vorwärtsgang-Schaltgassen (3/4) über Funktionsabschnitte in Wirkverbindung steht.

12. Schaltvorrichtung nach Anspruch 11, **dadurch gekennzeichnet, dass** die Funktionsabschnitte durch Ausnehmungen in der Wandung der Sperrelemente (5, 6) gebildet sind, wobei die Ausnehmungen der tangential angeordneten Sperrelemente (5, 6) zumindest bereichsweise in Überdeckung sind.

13. Schaltvorrichtung nach einem der Ansprüche 11 und 12, **dadurch gekennzeichnet, dass** jedes Sperrelement (5, 6) axial fest aber seitlich verschiebbar in dem Gehäuse (2) gelagert ist.

14. Schaltvorrichtung nach einem der Ansprüche 11 bis 13, **dadurch gekennzeichnet, dass** jedem Sperrelement (5, 6) zumindest eine federbelastete Kugelraste (8, 8A; 9, 9A) zugeordnet ist, die das Rastieren der Sperrelemente (5, 6) in vorbestimmten Verschiebepositionen mittels mehrerer Rastierkerben (A, B; D, E, F) ermöglicht.
